(19) Europäisches Patentamt
European Patent Office
Office européen des brevets

(11) EP 3 202 813 A1

(12) EUROPEAN PATENT APPLICATION

(43) Date of publication:
09.08.2017 Bulletin 2017/32

(21) Application number: 16305134.5

(22) Date of filing: 05.02.2016

(51) Int Cl.:
*C08G 61/08* (2006.01) *C08K 7/14* (2006.01)
*C08K 3/40* (2006.01) *C08K 9/06* (2006.01)
*C08K 13/06* (2006.01) *C08L 65/00* (2006.01)
*C08J 5/24* (2006.01) *C08F 283/14* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Telene SAS**
**59910 Bondues (FR)**

(72) Inventors:
- **Drozdzak Matusiak, Renata**
  **59290 Wasquehal (FR)**
- **Recher, Gilles**
  **59700 Marq-en-Baroeul (FR)**
- **Daemen, Alexander**
  **3090 Overijse (BE)**
- **Charret, Mathieu**
  **59100 Roubaix (FR)**

(74) Representative: **Brouwer, Hendrik Rogier et al**
**Arnold & Siedsma**
**Bezuidenhoutseweg 57**
**2594 AC The Hague (NL)**

# (54) CURABLE COMPOSITION AND MOLDED ARTICLE COMPRISING THE COMPOSITION

(57) There is provided a curable composition comprising (A) a cyclic olefin; (B) a metathesis catalyst for polymerizing the cyclic olefin; (C) a radical polymerization curable compound; and (D) a curing system for compound (C), wherein the curing system comprises a curing agent selected such that its half life $t_{1/2CT}$ at the curing temperature and the time $t_{c80}$ needed to complete at least 80% of the cyclic olefin polymerization reaction at the curing temperature (CT) satisfy 2.5 times $t_{c80} < t_{1/2CT} <$ 1000 times $t_{c80}$. The composition when used as a polymer matrix material in a composite retains a desirable combination of properties, in particular a good bonding with the reinforcing fibers. Also provided is a molded article comprising the composition and reinforcing fibers, and a method of manufacturing the same.

EP 3 202 813 A1

**Description**

TECHNICAL FIELD

The invention relates to a curable composition, a method of manufacturing a molded article of the curable composition, as well as a molded article comprising the composition. The invention in particular relates to a composition comprising a cyclic olefin. The composition provides a good adhesion with reinforcing fibers, such as glass fibers, in fibre-reinforced composites using the composition as matrix material.

BACKGROUND ART

Polymer matrix composites offer good mechanical and physical properties at relatively low weight. Composites may be based on either thermosetting or thermoplastic polymer matrix materials in which reinforcing fibers are embedded. The properties of composites are controlled by those of the fibers and the polymer matrix, whereby the interfacial region between the reinforcing fibres and the polymer matrix plays a special role. Indeed, a sufficient interface bonding between the reinforcing fibres and the polymer matrix to ensure adequate load transfer from the polymer matrix to the fibers is generally required for making effective use of the reinforcing fiber properties.

Composite properties, in particular toughness, are not easily predictable on the basis of constituent properties, and good properties of a polymer matrix material may not translate into good properties of the composite.

Cyclic polyolefin polymers for instance, such as those based on norbornene, are well known for their excellent heat resistance, high mechanical strength and moldability, and are therefore promising matrix materials for fiber reinforced composite materials. Their good properties however do not always translate to good properties of the composite, and there appears to be room for improvement, in particular in improving the adhesion between the matrix and the reinforcing fiber.

SUMMARY OF THE INVENTION

It is an aim of the present invention to provide a composition that when used as a polymer matrix material in a composite retains a desirable combination of properties, in particular a good bonding with the reinforcing fibers.

This and other aims are provided by a curable composition in accordance with claim 1. The composition comprises (A) a cyclic olefin; (B) a metathesis catalyst for polymerizing the cyclic olefin at a suitable curing temperature; (C) a radical polymerization curable compound; and (D) a curing system for compound (C), wherein the curing system comprises a curing agent selected such that its half life $t_{1/2CT}$ at the curing temperature and the time $t_{c80}$ needed to complete at least 80% of the cyclic olefin polymerization reaction at the curing temperature (CT) satisfy 2.5 times $t_{c80}$ < $t_{1/2CT}$ < 1000 times $t_{c80}$ .

A cured composition in accordance with the invention provides a remarkably good adhesion to reinforcing fibers in composite materials.

The curing system for compound (C) preferably comprises a heat curable system, examples of which are given below. A typical system may include a radical generating agent, an inhibitor, a retarder, and combinations of these.

The invention provides a curable composition wherein the curing system comprises a curing agent selected such that its half-life $t_{1/2CT}$ at the curing temperature of the cyclic olefin (CT) and the time $t_{C80}$ needed to complete at least 80% of the cyclic olefin polymerization reaction at the curing temperature (CT) satisfy 2.5 times $t_{C80}$ < $t_{1/2CT}$ < 1000 times $t_{c80}$ .

The composition, also when cured at one curing temperature, allows polymerizing the cyclic olefin substantially independently from the polymerization of compound (C). This is achieved by substantially preventing the curing agent or radical generator from generating a substantial amount of radicals until after at least 80%, more preferably at least 85%, more preferably at least 90% and most preferably at least 95% of the cyclic olefin polymerization reaction at the curing temperature has been completed. The composition thereto satisfies 2.5 times $t_{c80}$ < $t_{1/2CT}$ < 1000 times $t_{c80}$, more preferably 5 times $t_{c80}$ < $t_{1/2CT}$ < 500 times $t_{c80}$, even more preferably 10 times $t_{c80}$ < $t_{1/2CT}$ < 100 times $t_{c80}$, even more preferably 15 times $t_{c80}$ < $t_{1/2CT}$ < 50 times $t_{c80}$, even more preferably 15 times $t_{c80}$ < $t_{1/2CT}$ < 40 times $t_{c80}$. Other preferred embodiments of the composition satisfy 2.5 times $t_{c80}$ < $t_{1/2CT}$ < 1000 times $t_{c80}$, more preferably 2.5 times $t_{c80}$ < $t_{1/2CT}$ < 500 times $t_{c80}$, even more preferably 2.5 times $t_{c80}$ < $t_{1/2CT}$ < 100 times $t_{c80}$, even more preferably 2.5 times $t_{c80}$ < $t_{1/2CT}$ < 50 times $t_{c80}$, even more preferably 2.5 times $t_{c80}$ < $t_{1/2CT}$ < 40 times $t_{c80}$.

It has been found by the inventors that the composition may be cured at relatively low temperatures and still achieve the desirable balance of properties, such as a good bonding to fibers. A preferred embodiment provides a curable composition wherein the curing agent has a one-minute half-life temperature of less than 183°C, more preferably of less than 170°C, even more preferably of less than 160°C.

Curable compound (C) can be any compound curable by radical polymerization, and preferably soluble in or

at least easily mixable with the cyclic olefin. Compound (C) can be a monomer, an oligomer, or a polymer, or mixtures thereof.

In an embodiment of the invention, compound (C) has a Hildebrandt solubility parameter $\delta_T$ comprised between 15.4 and 19.8 MPa$^{1/2}$. The Hildebrandt solubility parameters are calculated in a known way by the three parameter system developed by Charles M. Hansen: $\delta_{T=}$ $\delta_D{}^2$+ $\delta_P{}^2$+ $\delta_H{}^2$, wherein $\delta_{T=}$ Total Hildebrand parameter; $\delta_{D=}$ dispersion components; $\delta_{P=}$ polar component; and $\delta_{H=}$ hydrogen bonding component. Calculations are performed by using HSPiP software, which can be found at http://hansen-solubility.com.

In an embodiment of the invention, curable compound (C) comprises a mixture of a compound (C1) comprising at least two isocyanate groups and a compound (C2) comprising a hydroxyl group.

Yet another embodiment relates to a composition wherein compound (C) comprises at least one ethylenically unsaturated bond.

Yet another embodiment relates to a composition wherein compound (C) comprises an ester compound, preferably a (meth)acrylate compound.

Yet another embodiment relates to a composition wherein compound (C) comprises a polymer, preferably a polyester and/or vinyl ester resin (C1) and a reactive solvent (C2), preferably a vinylaromatic compound. The cyclic olefin may also act as reactive solvent, in which case the amount of cyclic olefin monomer should be in excess of the amount consumed in the polymerization of the cyclic olefin at the curing temperature CT.

In an embodiment of the invention, a composition is provided comprising 0.1-30 wt.% of compound (C), more preferably 3-20 wt.% of compound (C), even more preferably 3-15 wt.% of compound (C), and most preferably 4-12 wt.% of compound (C), the wt.% being relative to the total weight of the composition.

Another embodiment of the invention provides a composition comprising 0.01 - 15 wt.% of curing agent (D), more preferably 0.1-10 wt.% of the curing agent, even more preferably 0.2 - 1 wt.% of the curing agent, the wt.% being relative to the total weight of the composition.

Yet another embodiment of the invention relates to a composition wherein the radical generator comprises a photo-initiator and/or a peroxide, preferably a non-cyclic peroxide.

A further embodiment according to the invention provides a composition wherein the at least one cyclic olefin comprises a dicyclopentadiene and/or a tricyclopentadiene, or mixtures with other comonomers such as ethylidene norbornene (ENB).

Yet another embodiment of the invention provides a composition comprising reinforcing fibers provided with a sizing composition.

The sizing composition comprises at least a coupling agent and a film former. A useful embodiment of the invention provides a curable composition wherein a film former of the sizing composition has a Hildebrandt solubility parameter $\delta_T$ comprised between 15.9 and 19.9 MPa$^{1/2}$.

In another embodiment of the invention, the film former in the sizing composition comprises a (co)polymer of monomer units having from four to six carbon atoms and one carbon-carbon double bond, more preferably a polybutadiene. The film former may also comprise paraffin wax. It is also possible to provide the sizing compositions with more than one film former, a combination of polybutadiene and paraffin wax being a preferred embodiment.

Still another embodiment in accordance with the invention offers a composition wherein the coupling agent comprises a silane compound having unsaturations.

The invention also relates to a method of manufacturing a molded article of the invented composition, the method comprising:

- combining at least the components (A) to (D) to form the composition;
- holding the composition at the suitable temperature effective to promote an olefin metathesis polymerization reaction of the cyclic olefin (A) and the metathesis catalyst (B);
- holding the composition at a second temperature effective to promote a radical polymerization reaction of compound (C) and the curing system (D).

An embodiment of the invention provides a method wherein the second temperature is lower than 190°C, more preferably lower than 170°C, even more preferably lower than 150°C, and most preferably lower than 140°C. The composition in accordance with the invention can be cured at such relatively low temperatures and still yield a good adhesion with reinforcing fibers, such as glass and carbon fibers for instance.

A further embodiment of the method comprises a method wherein the curing temperature and the second temperature are equal.

Preferred suitable curing temperatures for polymerizing the cyclic olefin comprise any temperature between 50°C - 150°C, more preferably between 60°C - 140°C, and most preferably between 70°C - 130°C. The relatively low curing temperatures allow using composite manufacturing methods on an industrial scale, such as resin transfer molding and similar technologies.

Another embodiment of the method comprises holding the composition at the curing temperature during a time interval sufficiently long to complete at least 80%, more preferably at least 85%, and most preferably at least 95% of the cyclic olefin polymerization reaction.

Yet another embodiment of the method comprises the additional steps of:

- contacting the curable composition with an adhering substrate; and
- subjecting the curable composition to conditions to provide a bond between the composition and the adhering substrate.

Yet another embodiment relates to a method comprising the step of injecting the composition into a closed mold, preferably by providing the mold with reinforcing fibers prior to injecting the composition.

In another embodiment of the method, the composition is held at a curing temperature of between 60°C - 120°C during at most 80 minutes.

The invention in another aspect relates to a molded article comprising a composition in accordance with the invention. In a particular embodiment a molded article of a composite material is provided, wherein the composite material comprises (a) a matrix polymer prepared by polymerizing the curable composition in accordance with any one embodiment thereof; and (b) reinforcing fibers or fillers in accordance with any one embodiment thereof, as disclosed in the present application.

The invention further relates to a molded composite article obtainable by the method of the invention, wherein the transverse 3 point bending strength at room temperature according to ISO 14125 of the composite article is above 50 MPa, more preferably above 80 MPa, and most preferably above 100 MPa.

DETAILED DESCRIPTION OF EMBODIMENTS OF THE INVENTION

The curable composition of the present invention comprises a cyclic olefin, a cyclic olefin metathesis polymerization catalyst, a radical polymerization curable compound (C), and a curing system for the compound (C) in accordance with claim 1. The invented composition allows curing the cyclic olefin to a substantial extent before substantially initiating the polymerization of compound (C).

The cyclic olefin used in the present invention comprises cyclic olefin monomer units that may be arranged to form a cyclic olefin polymer, obtained by polymerizing cyclic olefin monomer units. Any polymer of cyclic olefin monomer units known in the art may in principle be used in the invention. The cyclic olefin polymer comprises cyclic monomer units of a saturated cyclic hydrocarbon (cycloalkane) structure, and/or of an unsaturated cyclic hydrocarbon (cycloalkene) structure. The number of carbon atoms forming the cyclic structure in a monomer unit also is not particularly limited, but in preferred embodiments ranges from 4 to 30, more preferably from 5 to 20, and most preferably from 5 to 15.

The amount of cyclic olefin monomer units in the cyclic olefin polymer may be selected within a broad range, but is preferably 50 wt. % or more, more preferably 70 wt. % or more, and most preferably 90 wt. % or more, exclusive of any filler in the composition. A combination of different cyclic monomers may also be used. The cyclic olefin polymer of the composition may comprise an addition polymer of cyclic olefin monomer units, optionally copolymerized with another olefin monomer, and/or may comprise a ring-opening polymer of cyclic olefin monomer units, the latter being preferred.

A cyclic olefin monomer unit forms a cyclic structure of carbon atoms and carbon-carbon double bonds, examples whereof include but are not limited to norbornene based monomer units and monocyclic monomer units, a norbornene based monomer unit being preferred. The norbornene based monomer unit has a norbornene ring, and may for instance include 2-norbornene, norbornadiene and other bicyclic compounds; dicyclopentadiene (DCPD), dihydrodicyclopentadiene and other tricyclic compounds; tetracyclododecene, ethylidenetetracyclododecene, phenyltetracyclododecene and other tetracyclic compounds; tricyclopentadiene and other pentacyclic compounds; tetracyclopentadiene and other heptacyclic compounds; alkyl substituted compounds, such as methyl, ethyl, propyl and butyl substituted compounds, alkylidene substituted compounds, such as ethylidene substituted compounds, andaryl substituted compounds, such as phenyl and tolyl substituted compounds; and derivatives thereof having for instance an epoxy group, a methacryl group, a hydroxyl group, an amino group, a carboxyl group, a cyano group, a halogen atom, and others.

Monocyclic cyclic olefin monomer units may also be employed, suitable examples thereof comprising cyclobutene, cyclopentene, cyclooctene, cyclododecene, 1,5-cyclooctadiene and other monocyclic cyclic olefins, and substitution compounds and derivatives having polar groups like those mentioned as examples for the norbornene based monomer units. Such cyclic olefin monomers may be used alone or in combination with another or more types. Suitable linear olefin monomer units that may be addition-copolymerized with the above cyclic olefin monomer units include but are not limited to ethylene, propylene, 1-butene, 1-pentene, 1-hexene, 1-octene, 1-butene, 2-pentene, and 1,4-hexadiene for instance. The amount of the linear olefin monomer units used is preferably lower than 50 wt %, more preferably lower than 20 wt %, and more preferably lower than 10wt % of the total amount of the cyclic olefin and linear olefin monomer units.

Apart from the cyclic olefin monomer units, the curable composition further comprises a cyclic olefin metathesis polymerization catalyst. Such a catalyst may be used in an amount of 30-1000 ppm relative to the total weight of the composition. The metathesis polymerization catalyst of the invention comprises a catalyst capable of metathesis ring-opening polymerization of cyclic olefin monomer units. Such a catalyst may comprise a complex having a transition metal atom as center atom and a plurality of ions, atoms, and/or compounds bonded thereto. Transition metal atoms may be used to advantage, of which tantalum, molybdenum, tungsten, ruthenium and osmium may be mentioned in particular. Suitable catalyst systems are for instance disclosed in the following patent publications EP1468004, EP2280017, EP2151446, EP1757613, and EP1577282, incorporated herein.

Particularly useful catalytic systems comprise mono and bis-Schiff base catalysts, such as those depicted below:

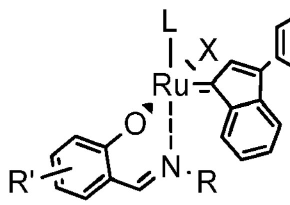

L=SIMes

SIMes=

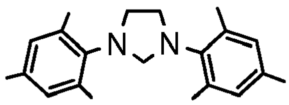

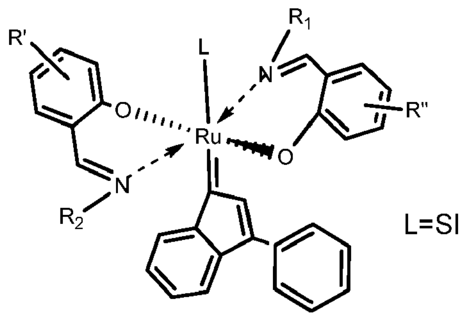

L=SIMes

SIMes=

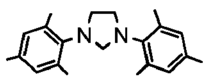

Examples of the above mentioned precatalysts comprising two Schiff base ligands are disclosed in European patent application EP2280017:

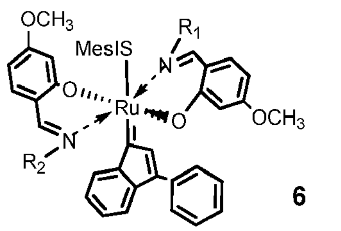

**6**

$R_1$=$R_2$=

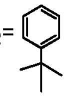

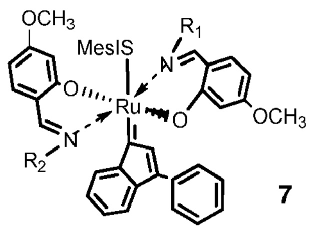

**7**

$R_1$=$R_2$=

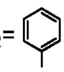

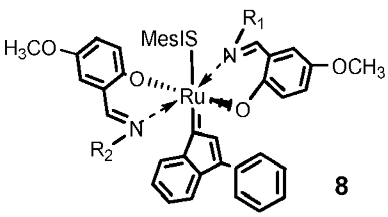

**8**

$R_1$=$R_2$=

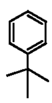

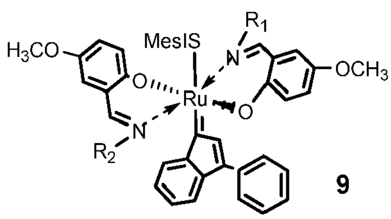

**9**

$R_1$=$R_2$=

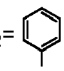

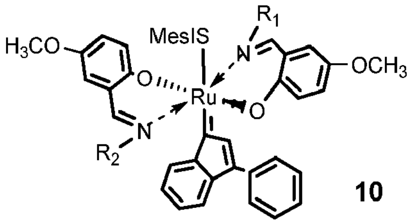

10

$R_1$=$R_2$= 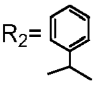

SIMes= 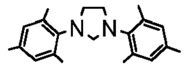

Other examples of catalysts which may be used in the present invention are disclosed below:

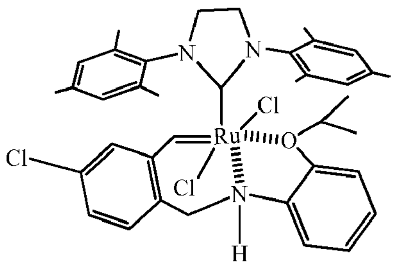

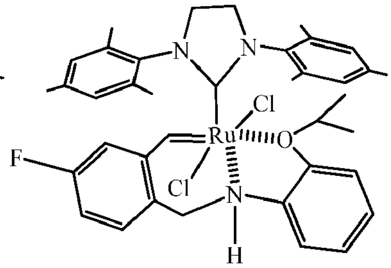

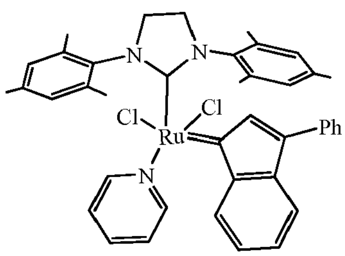

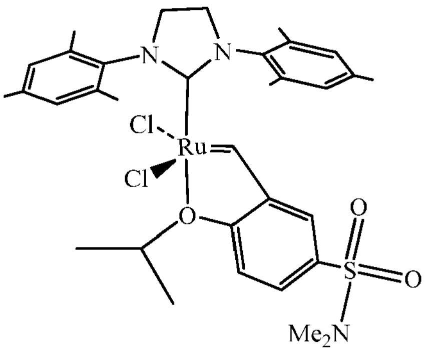

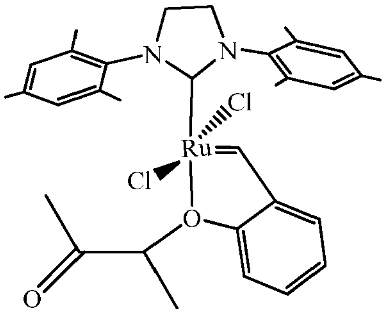

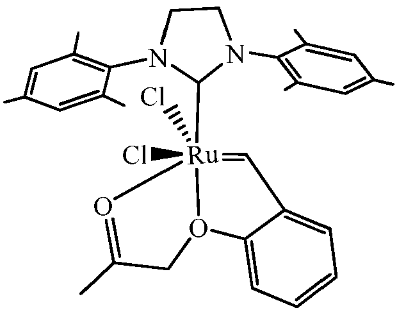

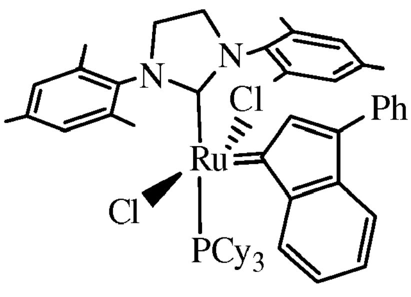

Particularly suitable catalysts also comprise Mo-W catalysts such as:

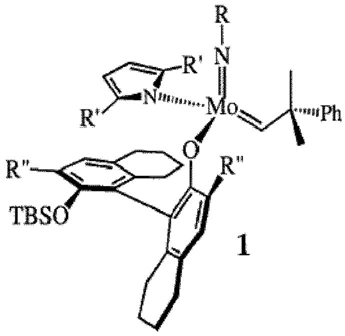

1

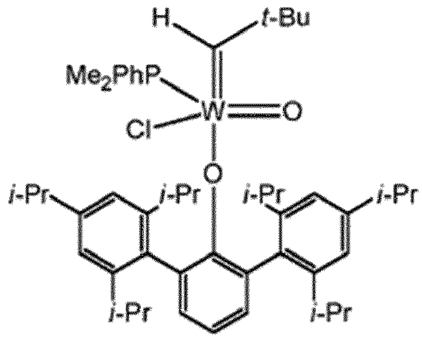

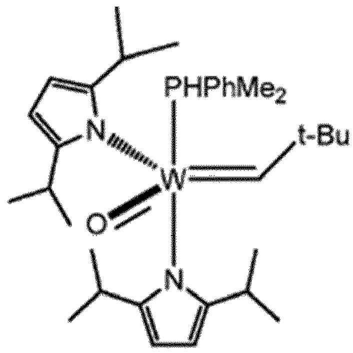

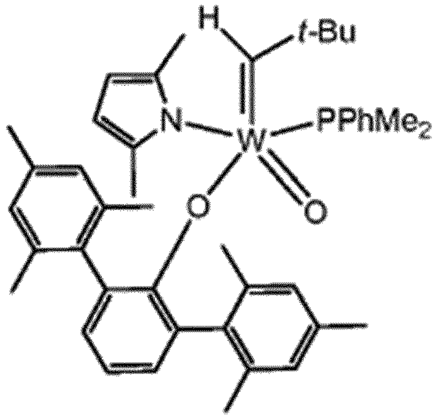

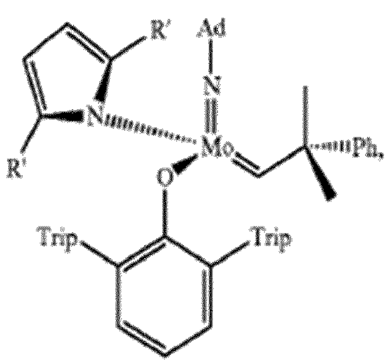

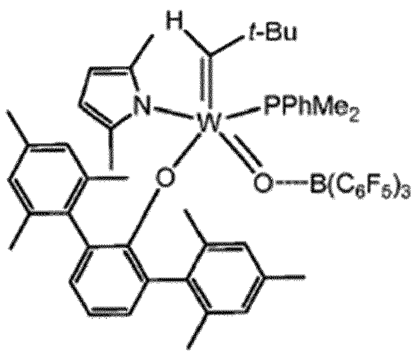

The olefin metathesis polymerization catalyst may be used in any suitable form, including a form in which it is dissolved or suspended in a solvent. Suitable solvents include linear aliphatic hydrocarbons such as n-pentane, n-hexane, n-heptane, or liquid paraffin, as well as alicyclic hydrocarbons such as cyclopentane, cyclohexane, alkyl substituted cyclohexane, di- and tricycloheptane,and cyclooctane to name a few, aromatic hydrocarbons such as benzene, toluene, xylene and others; nitrogen-containing solvents such as nitromethane, nitrobenzene, and acetonitrile, and oxygen-containing solvents such as diethyl ether and tetrahydrofuran.

The curable composition preferably also contains a catalyst retarder capable of extending working life time before curing starts. Suitable ring opening polymerization reaction retardants for example comprise triphenylphosphine, tributylphosphine, trimethylphosphine, triethylphosphine, and other phosphines; and aniline, pyridine, and other Lewis bases; may be mentioned. Among these, phosphines are preferable, since they are able to efficiently control the usable time of the polymerizable composition of the present invention and do not obstruct the polymerization reaction much. Further, among the cycloolefin monomers, monomers which have a 1,5-diene structure or 1,3,5-triene structure in their molecules also function as polymerization reaction retardants. As such compounds, 1,5-cyclooctadiene, 5-vinyl-2-norbornene, etc. may be mentioned.
Suitable polymerization reaction retarders include but are not limited to phosphite compounds, such as those disclosed in EP2460587.

The composition may also comprise a chain transfer agent, for instance a linear olefin having substituted groups. Suitable chain transfer agents include vinylnorbornene, 1-hexene, 2-hexene and other aliphatic olefins; styrene, divinylbenzene, and other vinyl aromatic olefins; olefins having alicyclic hydrocarbon groups such as vinylcyclohexane; vinylethers; methylvinylketone, as well as substituted (meth)acrylic acids and their salts, such as vinyl(meth)acrylate, allyl(meth)acrylate, and compounds such as allyltrivinylsilane, allylmethyldivinylsilane, allyldimethylvinylsilane, and 4-vinylaniline. Such chain transfer agents may be used alone or in combination and are generally added in an amount ranging from 0.01 to 10 pbw, and preferably 0.1 to 5 pbw with respect to 100 parts by weight of the cyclic olefin monomer units.

The composition in accordance with the invention further comprises a compound (C). Compound (C) is a radical polymerization curable compound that in a preferred embodiment comprises at least one ethylenically unsaturated bond and may be monofunctional. A multifunctional compound comprising at least one ethylenically unsaturated bond such as a vinyl group is also possible. Compound (C) is preferably configured to promote adhesion to an adhering substrate and capable of forming a polymeric structure. In preferred embodiments, the compound (C) does not substantially influence the catalytic activity of the metathesis polymerization catalyst in the composition, and is compatible with the cyclic olefin monomer units, i.e. does not give rise to phase separation. The compound (C) in a preferred embodiment has a Hildebrand solubility parameter comprised between 15.4 and 19.8 $MPa^{1/2}$, as calculated from Hansen parameters (http://hansen-solubility.com). The compound (C) in other preferred embodiments comprises a bi- or trifunctional compound, having two, respectively three carbon-carbon unsaturated bonds.

In preferred embodiments, compound (C) comprises a mixture of a compound (C1) comprising at least two isocyanate groups and a compound (C2) comprising a hydroxyl group. The compound (C1) this has a polyfunctional isocyanate compound which contains at least two isocyanate groups in its molecule. The isocyanate groups are reactive to the active hydrogen group present in the compound (C2).

Suitable examples of the polyfunctional isocyanate compound (C1) include but are not limited to toluene-2,4-diisocyanate, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanate diphenylether, 4,4'-methylene bis(phenylene isocyanate) (MDI), durylene diisocyanate, tolylene diisocyanate, xylylene diisocyanate (XDI), 1,5-naphthalene diisocyanate, benzidine diisocyanate, o-nitrobenzidine diisocyanate, and 4,4'-diisocyanate dibenzyl, and other aromatic diisocyanate compounds; methylene diisocyanate, 1,4-tetramethylene diisocyanate, 1,6-hexamethylene diisocyanate, 1,10-decamethylene diisocyanate, and other aliphatic diisocyanate compounds; 4-cyclohexylene diisocyanate, 4,4'-methylene bis(cyclohexyl isocyanate), 1,5-tetrahydronaphthalene diisocyanate, isophoron diisocyanate, hydrated MDI, hydrated XDI, and other alicyclic diisocyanate compounds; etc. or polyurethane prepolymers obtained by reacting these diisocyanate compounds and low molecular weight polyols or polyamines to give isocyanate ends. These compounds may be used alone or in combination.

The compound (C2) has a hydroxyl group which can chemically bond with an isocyanate group of the polyfunctional isocyanate compound (C1) to form a urethane compound or polymer. The compound (C2) preferably comprises an ethylenically unsaturated carbon-carbon bond, which further may improve the adhesion between the matrix resin and a reinforcing fiber (carbon or glass). As the compound (C2), a compound which has a cross-linkable carbon-carbon unsaturated bond and a hydroxyl group is preferable.

Suitable examples of compound (C2) include but are not limited to vinyl alcohol, allyl alcohol, oleyl alcohol, cis-13-dodecenol, and trans-9-octadecenol, and other unsaturated alcohols; norbornyl alcohol, 2-cyclohexen-1-ol, 2-cyclooctadien-1-ol, and p-vinyl phenol, and other alcohols which have an alicyclic structure; 2-hydroxyethyl acrylate, 2-hydroxyethyl methacrylate, 2-hydroxy-3-acryloxypropyl methacrylate, ethoxylated hydroxyethyl acrylate, ethoxylated hydroxyethyl methacrylate, polypropyleneglycol monomethacrylate, polypropyleneglycol monoacrylate, phenol acrylate, phenol methacrylate, bisphenol A type epoxy acrylate, novolac type epoxy acrylate, and brominated bisphenol A type epoxy acrylate, and other (meth)acrylics (meaning methacrylics or acrylics) which have one or more (meth)acryl groups and hydroxyl groups in their molecules. These compounds may be used alone or in combination.

Preferred unsaturated compounds comprise ethylenically unsaturated compounds, which are here understood to mean vinyl aromatic compounds such as styrene, alpha-methylstyrene, paramethylstyrene, aminostyrene, hydroxystyrene, divinyl benzene, vinyl toluene; allyl compounds such as monoallyl esters and/or ethers and diallyl esters and/or ethers; vinyl ether and vinyl ester compounds such as vinyl benzoate; and (meth)acrylic compounds such as (meth)acrylic acids and their esters. Particularly preferred multifunctional unsaturated compounds comprise a carboxylate compound, preferably an acrylate and/or methacrylate compound. Suitable (meth)acrylic compounds include but are not limited to ethyleneglycol di(meth)acrylate, propanediol di(meth)acrylate, butanediol di(meth)acrylate, diethyleneglycol di(meth)acrylate, triethyleneglycol di(meth)acrylate, tetraethyleneglycol di(meth)acrylate, polyethyleneglycol di(meth)acrylate and other bifunctional compounds, as well as trimethylolpropane tri(meth)acrylate, trimethylolethane (tri)methacrylate, trimethylolpropanepropyleneoxide-modified tri (meth)acrylate and other trifunctional compounds. Combinations of unsaturated compounds may also be used.

In other useful embodiments, compound (C) may comprise an oligomer of a polymer. Preferably, compound (C) comprises a polyester and/or vinyl ester resin (C3) and a reactive diluent (C4), preferably a vinylaromatic compound. The cyclic olefin monomers may also be used as reactive diluent. Saturated and unsaturated polyesters are suitable, whereby preferred examples of saturated polyesters include those based on bis(2-hydroxyethyl) terephthalate monomer units. This monomer is suitably synthesized by an esterification reaction between terephthalic acid and ethylene glycol, or by transesterification reaction between ethylene glycol and dimethyl terephthalate.

Suitable unsaturated polyester resins comprise ethylenically unsaturated carbon-carbon bonds in conjugation with a carbonyl bond and preferably comprise fumaric and/or maleic acid building blocks. This class of materials includes ortho-resins, based on phthalic anhydride, maleic anhydride or fumaric acid and glycols, such as 1,2-propylene glycol, ethylene glycol, diethylene glycol, triethylene glycol, 1,3-propylene glycol, dipropylene glycol, tripropylene glycol, neopentyl glycol or hydrogenated bisphenol-A; iso-resins prepared from isophthalic acid, maleic anhydride or fumaric acid, and glycols, and Bisphenol-A-fumarates, based on ethoxylated bisphenol-A and fumaric acid.

When compound (C) comprises an oligomer of a polymer, the composition preferably comprises a reactive diluent (C4). A reactive diluent is a diluent for the polymer compound (C3) and is able to copolymerize with the unsaturated polyester or vinylester resin (or methacrylate resin), due to the presence of at least one radical polymerizable unsaturated group. Suitable reactive diluents comprise but are not limited to alkenyl aromatic monomers, such as for example styrene and divinylbenzene; cyclic olefins, vinyl esters, (meth)acrylates, vinyl ethers and vinyl amides but all other known reactive monomers in the field of thermosetting resins may also be used. Preferred reactive diluents are styrene, alpha-methyl styrene, chlorostyrene, vinyl toluene, divinyl benzene, tert.butyl styrene; diester of itaconic acid such as for example dimethyl itaconate; methyl methacrylate, tert.butylacrylate, butanediol dimethacrylate vinyl acetate, vinyl propionate, vinyl versatate, vinylbenzoate, divinyl adipate, divinyl phthalate, N-vinyl pyrolidone, N-vinyl caprolactam and mixtures thereof.

Compound (C) may also comprise a vinylester resin. Such resin may for instance be produced by the esterification of an epoxy resin with an unsaturated monocarboxylic acid. Epoxy resins may for example be prepared from phenolic compounds in combination with epichlorohydrins resulting in epoxy resins like for example a Bisphenol A diglycidyl ether, or a novolac epoxide. The reactive unsaturation is a vinylester resin is connected to a side-group on the resin, by reacting an epoxide functional pendant group in the resin, for example a glycidyl functional acrylate, with an unsaturated carboxylic acid, such as for example methacrylic acid or acrylic acid or the monoesters of fumaric acid, maleic acid, citraconic acid, itaconic acid or mesaconic acid.

The composition in accordance with the invention further comprises a curing system for compound (C). The curing system comprises a radical generator and in an embodiment is configured to produce radicals and initiate a radical polymerization reaction of compound (C) monomer or oligomer units to form a polymerized or cross-linked compound (C) polymer.

Suitable curing agents in the curing system may include a radical source such as a peroxide, a hydroperoxide, a diazo compound, a perester and/or a perketone compound, including cyclic and linear compounds. A linear (hydro) peroxide is particularly preferred as curing agent for the compound (C). Suitable peroxides include but are not limited to alkylperoxides, arylperoxides, and aralkyl or alkaryl peroxides. Secondary and tertiary aliphatic and aromatic hydroperoxides, such as tert-butyl hydroperoxide, tert-amyl hydroperoxide, and cumene hydroperoxide, are particularly preferred. Suitable organic peroxides further comprise t-butyl hydroperoxide, p-menthane hydroperoxide, cumen hydroperoxide, and other hydroperoxides; dicumyl peroxide, t-butylcumyl peroxide, $\alpha,\alpha'$-bis(t-butylperoxy-m-isopropyl)benzene, di-t-butyl peroxide, 2,5-dimethyl-2,5-di(t-butylperoxy)-3-hexine, 2,5-dimethyl-2,5-di(t-butylperoxy)hexane, and other dialkyl peroxides; dipropionyl peroxide, benzoyl peroxide, and other diacyl peroxides; 2,2-di (t-butyl peroxy) butane, 1,1-di (t-hexylperoxy) cyclohexane, 1,1-di(t-butylperoxy)-2-methylcyclohexane, 1,1-di(t-butylperoxy) cyclohexane, and other peroxy ketals; t-butyl peroxyacetate, t-butyl peroxybenzoate, and other peroxy esters; t-butyl peroxyisopropyl carbonate, di(isopropylperoxy)dicarbonate, and other peroxy carbonates; t-butyltrimethylsilyl peroxide and other alkylsilyl peroxides; 3,3,5,7,7-pentamethyl-1,2,4-trioxepane, 3,6,9-triethyl-3,6,9-trimethyl-1,4,7-triperoxonane, 3,6-diethyl-3,6-dimethyl-1,2,4,5-tetraxane, and other cyclic peroxides. Among these, from the viewpoint of little hindrance to metathesis polymerization reactions, dialkyl peroxides, peroxy ketals, and cyclic peroxides are preferable.

Suitable diazo compounds may comprise 4,4'-bisazidebenzal(4-methyl)cyclohexanone, 2, 6-bis (4' -azidobenzal)cyclohexanone, and others.

The radical generator may be used alone or in combination. The amount of the radical generator in the curable composition of the present invention is preferably 0.01-10 wt.% of the total composition, preferably 0.1 to 10 wt.-%, more preferably 0.5 to 5 wt.-%.

The curing system of the curable composition may also comprise retardants, such as alkoxyphenols, catechols, and benzoquinones. In a preferred embodiment of the composition, the curing system comprises a curing agent selected such that its half life $t_{1/2CT}$ at the curing temperature and the time $t_{c80}$ needed to complete at least 95% of the cyclic olefin polymerization reaction at the curing temperature satisfy 2.5 times $t_{c80} < t_{1/2CT} <$ 1000 times $t_{c80}$.

The curing system for curing compound (C) may further comprise any other curing agent besides those used for heat curing, such as for instance a photo initiator that forms active radicals upon irradiation with light.

The curing system of the curable composition may further comprise other than ultraviolet (UV) radiation-curable components. Electron beam cure for instance may be an alternative to UV cure. Electron beam cure does not require the presence of photo initiators. In accordance with the invention, compound (C) is not radiated by electron beam to generate radicals before at least 80% of the cyclic olefin polymerization reaction is completed at the curing temperature.

In preferred embodiments, fillers may be added to the composition of the present invention as substrate materials. Both inorganic and organic fillers may be used without any limitation, whereby an inorganic filler is preferred. Suitable inorganic fillers for instance include metal particles of iron, copper, nickel, gold, silver, aluminum, lead, and tungsten; carbon particles such as carbon black, graphite, activated carbon, carbon micro-balloons and the like; inorganic oxide particles such as silica, alumina, titanium oxide, iron oxide, zinc oxide, magnesium oxide, and the like; inorganic carbonate particles such as calcium carbonate and magnesium carbonate; calcium sulfate; inorganic silicate particles such as talc, clay, mica, kaolin, fly ash, montmorillonite, calcium silicate, and glass particles; as well as particles of titanate, aluminum nitride and silicon carbide. Suitable organic fillers may for instance comprise wood, starch, lignin, organic pigment, and polymer particles such as those of polystyrene, polyamide, polyolefins such as polyethylene and polypropylene, polyvinylchloride, elastomers and/or waste polymers. It is also possible to add functional fillers, such as piezoelectric ceramics, fillers that change static/conductive properties such as carbon nanotubes, and rheology modifiers. The fillers may be provided with a sizing composition in accordance with the invention. Milled or short carbon, glass and other reinforcing fibers may also be used.

According to certain embodiments of the invention the composition comprises reinforcing fibers as an adhering substrate. Suitable reinforcing fibers to be used in the present invention can be chosen within wide ranges. It is possible for instance to use inorganic fibers, such as glass fibers, carbon and graphite fibers, alumina fibers, tungsten fibers, molybdenum fibers, titanium fibers, steel fibers, boron fibers, silicon carbide fibers, and silica fibers. Other suitable fibers include organic fibers such as aramid fibers, ultra high molecular weight polyethylene fibers, liquid crystalline and other polyester fibers, and the like, as well as natural fibers and reinforcements. Preferred reinforcing fibers comprise glass and carbon fibers, of which E-glass, R-glass, S-glass and S2-glass fibers are used most preferably. Newer fibers like Advancetex/Hipertex and Innofiber from PPG may also be used.

The reinforcing fibers can be applied in any physical form, i.e. as mono- and multifilaments, or in the form of strands and yarns, as woven fabric or according to any other textile structure, as short fibers, milled fibers or as continuous fibers, or in the form of a preimpregnated sheet ('prepreg'). Any combination of different types of fibers is also possible. The amount of the reinforcing fibers may be chosen within wide ranges but suitable amounts generally range from 20 - 70 vol.%, a fiber volume fraction of 55-65 vol.% being preferred in most applications.

In other embodiments of the invention, the reinforcing fibres are provided with a coupling agent that is incorporated in a sizing composition. The sizing composition is configured to provide an improved adhesion of the composition to an adhering substrate material, such as reinforcing fibers. The adhering substrate material is preferably sized with commercially available silane compounds that do not interfere with the used olefin metathesis catalysts, and are compatible with cyclic olefin polymers, in particular polydicyclopentadiene.

In useful embodiments of the invention, a silane, thiol and/or titanate coupling agent is added to the sizing composition. Non- limiting examples of suitable silane coupling agents include methacrylate, acrylate, amino, or epoxy functionalized silanes, as well as alkyl, alkenyl, and norbornnyl silanes. Particularly preferred silane coupling agents comprise allyltrimethoxy silane, styryltrimethoxy silane. N-vinylbenzyl-aminoethyl-γ-aminopropyltrimethoxy silane and salts thereof, as well as vinyltris(2-methoxyethoxy) silane, α-methacryloxybutyltrimethoxy silane, γ-mercaptopropyltrimethoxy silane, and aminoethyl-γ-aminopropyltrimethoxy silane.

The sizing formulation applied onto the adhering substrate, in particular the reinforcing fibers, typically further comprises a film former apart from the coupling agent and optionally a lubricant. The film former typically comprises a film forming polymer. Any components of a sizing formulation that do not substantially interfere with the metathesis catalyst operation and/or substantially decreases the cyclic olefin polymerization reaction are considered to be compatible with the composition and may generally be used in the invention.

Film formers that are compatible with and/or do not interfere with ring opening metathesis polymerization (ROMP) are preferably used and comprise epoxies, polyesters, polyurethanes, polyolefins, and/or polyvinyl acetates.

Other common film formers that do not adversely affect the performance of the cyclic olefin metathesis catalyst may also be used. Film formers are typically used as nonionic, aqueous emulsions, and combinations of different film formers may be used if desired.

Particularly useful film formers of the sizing composition have a Hildebrandt solubility parameter $\delta_T$ comprised between 15.9 and 19.9 $MPa^{1/2}$.

In a particularly preferred embodiment of the invention, the sizing formulation, and the film former in particular comprise a polyolefin. Suitable polyolefins include but are not limited to polyethylenes, polypropylenes, polybutylenes, and copolymers thereof, and the polyolefins may be oxidized, maleated, or otherwise treated for effective film former use. In a preferred embodiment of the invention, the film former comprises comprises a (co)polymer of monomer units having from four to six carbon atoms and one carbon-carbon double bond, and more preferably a polybutadiene, which may be functionalized or comprise a butadiene-styrene co- polymer for instance. The polybutadiene-based film former preferably comprises a polymer emulsion, wherein the polybutadiene has a weight average molecular weight between 300 and 20000 and has a solubility parameter $\delta$T calculated from 3 Hansen parameters of at least 15.9 MPa1/2 and not more than 19.9 MPa1/2. Examples of suitable polybutadiene-based film formers are available from Cray Valley and Synthomer under the tradenames of Ricon, Krasol and Lithene.

A nonionic lubricant as well as an anti-static agent may also be added to the sizing composition. Suitable nonionic lubricants that are compatible with ROMP compositions include but are not limited to esters of polyethylene glycols and block copolymers of ethylene oxide and propylene oxide. More than one nonionic lubricant may be used in a given sizing formulation if desired. Suitable nonionic lubricants include but are not limited to block copolymers of ethylene oxide and propylene oxide. Cationic lubricants may also be added to the sizing composition, such as polyethyleneimines for instance. The sizing composition may further comprise pH modifiers, such as acetic acid. The sizing composition may further comprise other useful additives, such as ernulsifiers, defoaming agents and cosolvents, as well as biocides and antioxidants for instance.

The sizing composition can be prepared by any method known in the art and applied to the adhering substrate and to the reinforcing fibers in particularly useful embodiments by any method, known in the art.

The invention is also directed to molded articles manufactured from the invented composition comprising a cyclic olefin, a cyclic olefin metathesis catalyst, such as a ROMP catalyst, a compound (C), a curing agent for the compound (C), and optionally an adhering substrate, such as, for example reinforcing glass fibers. Molded articles according to the invention are obtained by a method comprising combining at least the components (A) to (D) to form the composition; holding the composition at a curing temperature effective to promote an olefin metathesis polymerization reaction of the cyclic olefin (A) and the metathesis catalyst (B); holding the composition at a second temperature effective to promote a radical polymerization reaction of compound (C) and the radical generator (D); wherein the curing system comprises a curing agent selected such that its half- life $t_{1/2CT}$ at the curing temperature and the time $t_{c80}$ needed to complete at least 80% of the cyclic olefin polymerization reaction at the curing temperature (CT) satisfy 2.5 times $t_{c80}$ < $t_{1/2CT}$ < 1000 times $t_{c80}$ .

Methods of manufacturing the molded articles may include but are not limited to those formed by state of the art composite manufacturing techniques, such as casting, centrifugal casting, pultrusion molding, injection pultrusion molding, filament winding, rotational molding, and open mold molding. In an embodiment of the invention, a method is provided comprising the step of injecting the composition into a closed mold, wherein the mold is preferably provided with reinforcing fibers prior to the injection of the composition. Such techniques include reaction injection molding (RIM), resin transfer molding (RTM), vacuum assisted resin infusion (VARI), Seeman's Composite Resin Infusion Molding Process (SCRIMP), Reinforced Reaction Injection Molding (RRIM), Structural Reaction Injection Molding (SRIM), thermal expansion transfer molding (TERM), resin injection recirculation molding (RICM), controlled atmospheric pressure resin infusion (CAPRI), and the like.

Subjecting the composition to conditions effective to promote an olefin metathesis reaction of the cyclic olefin and a radical polymerization of the compound (C), generally involves heating the composition to a suitable curing temperature during a suitable time interval, optionally at a pressure above 0.1 MPa. The heating temperature in an embodiment of the method is in a range of RT to 200°C, more preferably 50°C to 200°C, even more preferably 60° C to 120°C. The heating times preferably are in a range of 0.1 to 180 minutes, more preferably 1 to 120 minutes, even more preferably at most 80 minutes. The pressure applied during molding may be selected in accordance with the manufacturing method used and may be as low as a 0.1 to 0.5 MPa, for instance when using RTM. Vacuum or reduced pressures may also be used.

Particularly preferred is a method wherein the second temperature is lower than 190°C, more preferably lower than 170°C, even more preferably lower than 150°C, and most preferably lower than 140°C.

Another particularly preferred embodiment relates to a method wherein the composition is held at a curing temperature of between 60°C - 120°C during at most 80 minutes.

Molded article may be used in a variety of applications, including but not limited to aerospace components, marine components, automotive components, sporting goods, electrical components, medical components, and military

components. In useful embodiments the molded article may be a turbine component such as a turbine blade component or turbine blade. Examples of aerospace components may include but are not limited to fuselage skins, wings, fairings, doors, access panels, and stiffeners for instance. Examples of automotive components may include but are not limited to body panels, fenders, spoilers, protective plates, hoods, pillars, leaf springs and doors. Other examples of suitable articles include bridges, pipes, pressure vessels, containers, and so on. Examples of military components include but are not limited to ballistic resistant armor plates and other structures for protecting personnel or equipment. Suitable sporting goods may include tennis rackets, hockey sticks, golf club shafts and the like.

A molded article in accordance with the invention and made form a PDCPD composition in particular shows an unprecedented combination of properties, in particular a relatively high toughness, even at very low temperatures, a relatively high chemical corrosion resistance, and a relatively high heat deflection temperature or glass transition temperature Tg, the properties being relative to the state of the art PDCPD molded articles. Also, the (matrix) polymer has a volatile content of less than 3 wt.% relative to the total weight of the matrix polymer in certain preferred embodiments.

A useful embodiment of the invention provides a molded article wherein the transverse 3 point bending strength at room temperature according to ISO 14125 of the article is above 50 MPa, more preferably above 80 MPa, and most preferably above 100 MPa.

EXAMPLES

The present invention will now be described more specifically with reference to examples and comparative examples, without however being limited to these examples. It is to be noted that, in the examples and comparative examples, "parts" and "%" are based on weight basis unless otherwise noted.

**General preparation**

Curable compositions were prepared by mixing DCPD monomer units, monomer units of another cyclic olefin, methacrylate or acrylate monomer units and a radical generator. The specific compositions are given further below. The resulting solution was stirred for 5 min at room temperature. Further a metathesis catalyst, activator and retarder were dissolved in a small amount of a solvent and added to the mixture.

**Determination of the total enthalpy $\Delta H_{ROMP}$ of ROMP reactions (the ring opening metathesis polymerization of cyclic olefins (A))**

Small samples of the curable compositions (Composition 1-15) comprising (A) to (C) without including curing system (D) were put into hermetic pans and heated in a DSC chamber to 250°C, with a heating rate of 10 °C /min. $\Delta H_{ROMP}$ was taken as the overall enthalpy of the exothermic reactions observed during samples heating.

**Determination of the half-life parameter $t_{1/2CT}$**

The half-life of the radical generators used in the compositions for different curing temperatures CT have been calculated by using the well-known formulae given below and data obtained by the supplier of the radical generators (AkzoNobel) (Tables 1-4)

$$k_d = A \cdot e^{-Ea/RT}$$

$$t_{½} = (\ln 2)/k_d$$

$E_a$ = 127.52 kJ/mole
A = 7.59E+13 $s^{-1}$
R = 8.3142 J/mole·K
T = (273.15+°C) K

Table 1: The half-life $t_{1/2CT}$ of Trigonox 29C at different curing temperatures CT

| T (°C) | T(K) | $k_d$ | $t_{1/2}$ (s) | $t_{1/2}$ (min) | $t_{1/2}$ (h) |
|---|---|---|---|---|---|
| 80,00 | 353,50 | 1,08868E-05 | 63668,8 | 1061,1 | 17,7 |
| 90,00 | 363,50 | 3,59158E-05 | 19299,2 | 321,7 | 5,4 |
| 95,00 | 368,50 | 6,36689E-05 | 10886,7 | 181,4 | 3,0 |
| 100,00 | 373,50 | 0,000111151 | 6236,1 | 103,9 | 1,7 |
| 105,00 | 378,50 | 0,000191208 | 3625,1 | 60,4 | 1,0 |
| 110,00 | 383,50 | 0,000324305 | 2137,3 | 35,6 | 0,6 |
| 120,00 | 393,50 | 0,000896106 | 773,5 | 12,9 | 0,2 |
| 130,00 | 403,50 | 0,002354429 | 294,4 | 4,9 | 0,08 |

$$k_d = A \cdot e^{-Ea/RT}$$

$$t_{½} = (\ln 2)/k_d$$

$E_a$ = 124.90 kJ/mole
A = 1.54E+14 $s^{-1}$
R = 8.3142 J/mole·K
T = (273.15+°C) K

Table 2: The half-life $t_{1/2CT}$ of Trigonox 21S at different curing temperatures CT

| T(°C) | T(K) | $k_d$ | $t_{1/2}$ (s) | $t_{1/2}$ (min) | $t_{1/2}$ (h) |
|---|---|---|---|---|---|
| 80,00 | 353,15 | 1,85907E-05 | 37284,7 | 621,4 | 10,4 |
| 90,00 | 363,15 | 6,1694E-05 | 11235,2 | 187,3 | 3,1 |
| 95,00 | 368,15 | 0,000109674 | 6320,1 | 105,3 | 1,8 |
| 100,00 | 373,15 | 0,000191986 | 3610,4 | 60,2 | 1,0 |
| 105,00 | 378,15 | 0,000331134 | 2093,3 | 34,9 | 0,6 |
| 110,00 | 383,15 | 0,000563067 | 1231,0 | 20,5 | 0,3 |
| 120,00 | 393,15 | 0,001563434 | 443,3 | 7,4 | 0,1 |
| 130,00 | 403,15 | 0,004126636 | 168,0 | 2,8 | 0,05 |
| 150,00 | 423,15 | 0,025053069 | 27,7 | 0,5 | 0,01 |
| 190,00 | 463,15 | 0,578695688 | 1,2 | 0,02 | 0,0003 |

$$k_d = A \cdot e^{-Ea/RT}$$

$$t_{½} = (\ln 2)/k_d$$

$E_a$ = 140.78 kJ/mole
A 1.94E+15 $s^{-1}$
R = 8.3142 J/mole·K
T =(273.15+°C) K

Table 3: The half-life $t_{1/2CT}$ of Trigonox 42S at different curing temperatures CT

| T(°C) | T(K) | $k_d$ | $t_{1/2}$ (s) | $t_{1/2}$ (min) | $t_{1/2}$ (h) |
|---|---|---|---|---|---|
| 80,00 | 353,15 | 2,91368E-06 | 237894,4 | 3964,9 | 66,1 |
| 90,00 | 363,15 | 1,09106E-05 | 63529,4 | 1058,8 | 17,6 |
| 95,00 | 368,15 | 2,05529E-05 | 33725,0 | 562,1 | 9,4 |
| 100,00 | 373,15 | 3,80651E-05 | 18209,5 | 303,5 | 5,1 |
| 105,00 | 378,15 | 6,93588E-05 | 9993,7 | 166,6 | 2,8 |
| 110,00 | 383,15 | 0,000124416 | 5571,2 | 92,9 | 1,5 |
| 120,00 | 393,15 | 0,000382876 | 1810,4 | 30,2 | 0,5 |
| 130,00 | 403,15 | 0,001114355 | 622,0 | 10,4 | 0,2 |
| 150,00 | 423,15 | 0,008112709 | 85,4 | 1,4 | 0,02 |
| 190,00 | 463,15 | 0,257083172 | 2,7 | 0,04 | 0,00074 |

$$k_d = A \cdot e^{-Ea/RT}$$

$$t_{½} = (\ln 2)/k_d$$

$E_a$ = 153.46 kJ/mole
A = 4.20E+15 $s^{-1}$
R = 8.3142 J/mole·K
T = (273.15+°C) K

Table 4: The half-life $t_{1/2CT}$ of Trigonox B at different curing temperatures CT

| T(°C) | T(K) | $k_d$ | $t_{1/2}$ (s) | $t_{1/2}$ (min) | $t_{1/2}$ (h) |
|---|---|---|---|---|---|
| 80 | 353,15 | 8,4011E-08 | 8250660 | 137511,0 | 2291,8 |
| 90 | 363,15 | 3,5432E-07 | 1956287 | 32604,8 | 543,4 |
| 95 | 368,15 | 7,0662E-07 | 980931 | 16348,8 | 272,5 |
| 100 | 373,15 | 1,3834E-06 | 501047 | 8350,8 | 139,2 |
| 105 | 378,15 | 2,6607E-06 | 260515 | 4341,9 | 72,4 |
| 110 | 383,15 | 5,0306E-06 | 137785 | 2296,4 | 38,3 |
| 120 | 393,15 | 1,7131E-05 | 40462 | 674,4 | 11,2 |
| 130 | 403,15 | 5,4895E-05 | 12627 | 210,4 | 3,5 |
| 150 | 423,15 | 0,00047789 | 1450 | 24,2 | 0,4 |
| 190 | 463,15 | 0,0206738 | 34 | 0,6 | 0,01 |

**Determination of $t_{c80}$**

Small samples of the curable compositions (1-15) comprising (A) to (C) without including curing system (D) were put into hermetic pans and cured at curing temperature (CT) during a certain time period by using the isothermal DSC method. Further the samples were cooled to 25°C and reheated to 250°C, speed of heating 10 °C /min. The conversion of cyclic monomer was calculated as ratio of the residual $\Delta H_{rez}$ and the total $\Delta H_{ROMP}$ in accordance with ISO 11357. The curing time at CT was extended until the percent of conversion was equal to 80%. Thus $\mathbf{t_{C80}}$ was a time period needed to reach 80% conversion of the ROMP reactions.

**Evaluation of matrix-fiber adhesion**

The matrix-fiber adhesion strength was evaluated by using the transverse three point bending test method in accordance with ISO 14125. The polymerized samples according to example 1 to 17 were cut from wide unidirectional rods by means of a water-cooled diamond saw, and the edges were sanded to eliminate damage resulting from the cutting. Eight samples were tested for each material combination. Nominal sample dimensions were 70 x 10 x 2 mm with the fiber direction perpendicular to the sample axis, the span length was 40 mm, and the test speed was 1 mm/min.

In some cases the polymerized samples are not even rigid enough to be cut on the diamond-saw. In that case the adhesion level is very low and the sample is reported as "soft sample"

**Curable compositions:**

Composition 1

- Cyclic monomers (A): DCPD: 81%, TCPD: 9%,
- Metathesis catalyst (B): (VC 843)- Ruthenium salicycl aldimine catalyst solution 1.2phr (per 100g of the mixture of A and C) /Retarder: 0.03phr (per 100g of the mixture of A and C) of triisopropyl phosphite
- Co-monomer (C): Trimethyl propane trimethacrylate (TMPTMA, Sigma-Aldrich): 10%,
- Radical initiators (D): Trigonox 29C: 0.3 phr, Trigonox B: 0.3 phr (per 100g of the mixture of A and C)

Composition 2

- Cyclic monomers: DCPD: 72%, TCPD: 18%,
- Metathesis catalyst (B): (VC 843)- Ruthenium salicycl aldimine catalyst solution 1.2phr (per 100g of the mixture of A and C) /Retarder: 0.03phr (per 100g of the mixture of A and C) of triisopropyl phosphite
- Co-monomer: Trimethyl propane trimethacrylate (TMPTMA, Sigma-Aldrich): 10%,
- Radical initiators (D): Trigonox 29C: 0.3 phr, Trigonox B: 0.3 phr (per 100g of the mixture of A and C)

Composition 3

- Cyclic monomers (A): DCPD: 78%, ENB: 12%,
- Metathesis catalyst (B): (VC 843)- Ruthenium salicycl aldimine catalyst solution 1.2phr (per 100g of the mixture of A and C) /Retarder: 0.03phr (per 100g of the mixture of A and C) of triisopropyl phosphite
- Co-monomer (C): Trimethyl propane trimethacrylate (TMPTMA, Sigma-Aldrich): 10%,
- Radical initiators (D): Trigonox 29C: 0.3 phr, Trigonox B: 0.3 phr (per 100g of the mixture of A and C)

Composition 4

- Cyclic monomers (A): DCPD: 80%, TCPD: 10%,
- Metathesis catalyst (B): (VC 843)- Ruthenium salicycl aldimine catalyst solution 1.2phr (per 100g of the mixture of A and C) /Retarder: 0.02phr (per 100g of the mixture of A and C) of triisopropyl phosphite
- Co-monomer (C): 3,3,5 trimethyl cyclohexanol methacrylate (SR421A, Arkema): 10%,
- Radical initiators (D): Trigonox 29C: 0.3 phr, Trigonox B: 0.3 phr (per 100g of the mixture of A and C)

Composition 5

- Cyclic monomers (A): DCPD: 82.8%, TCPD: 7.2%,
- Metathesis catalyst (B): (VC 843)- Ruthenium salicycl aldimine catalyst solution 1.2phr (per 100g of the mixture of

A and C) /Retarder: 0.03phr (per 100g of the mixture of A and C) of triisopropyl phosphite
- Co-monomer (C): Trimethyl propane triacrylate (TMPTA, Sigma-Aldrich): 10%,
- Radical initiator(D): Trigonox 29C: 0.6 phr (per 100g of the mixture of A and C)

Composition 6

- Cyclic monomers (A): DCPD: 82.8%, TCPD: 7.2%,
- Metathesis catalyst (B): C764: 0.020phr /Retarder: P(OiPr)3 0.008phr (per 100g of the mixture of A and C)
- Co-monomer (C): Trimethyl propane trimethacrylate (TMPTMA, Sigma-Aldrich): 10%,
- Radical initiator (D): Trigonox 29C: 0.6 phr (per 100g of the mixture of A and C)

Composition 7

- Cyclic monomers: DCPD: 80%, TCPD: 10%,
- Metathesis catalyst (B): (VC 843)- Ruthenium salicycladimine catalyst solution 1.2phr (per 100g of the mixture of A and C) /Retarder: 0.02phr (per 100g of the mixture of A and C) of triisopropyl phosphite
- Co-monomer: Trimethyl propane trimethacrylate (TMPTA, Sigma-Aldrich): 10%,
- Radical initiator: Trigonox B (tert-butyl peroxide): 0.6 phr (per 100g of the mixture of A and C)

Composition 8

- Cyclic monomers (A): DCPD: 82.8%, TCPD: 7.2%,
- Metathesis catalyst (B): (VC 843)- Ruthenium salicycladimine catalyst solution 1.2phr (per 100g of the mixture of A and C) /Retarder: 0.02phr (per 100g of the mixture of A and C) of triisopropyl phosphite
- Co-monomer (C): Trimethyl propane trimethacrylate (TMPTMA, Sigma-Aldrich): 10%,
- Radical initiators (D): Trigonox 42S: 0.6 phr (per 100g of the mixture of A and C)

Composition 9

- Cyclic monomers: DCPD: 80%, TCPD: 10%,
- Metathesis catalyst (B): (VC 843)- Ruthenium salicycladimine catalyst solution 1.2phr (per 100g of the mixture of A and C) /Retarder: 0.02phr (per 100g of the mixture of A and C) of triisopropyl phosphite
- Co-monomer (C): Trimethyl propane trimethacrylate (TMPTMA, Sigma-Aldrich): 10%,
- Radical initiator (D): Trigonox 21S: 0.6 phr (per 100g of the mixture of A and C)

Composition 10

- Cyclic monomers: DCPD: 80%, TCPD: 10%,
- Metathesis catalyst (B): C764: 0.020phr /Retarder: $PPh_3$ 0.5 phr (per 100g of the mixture of A and C)
- Co-monomer: exo-1,7,7- trimethylbicyclo(2,2,1)hept-2-yle methacrylate (SR423D, Arkema): 10%,
- Radical initiators: Trigonox 21S: 0.6 phr (per 100g of the mixture of A and C)

Composition 11

- Cyclic monomers (A): DCPD: 80%, TCPD: 10%,
- Metathesis catalyst (B): C764: 0.020phr /Retarder: $P(O^iPr)_3$ 0.008phr (per 100g of the mixture of A and C)

- Co-monomer (C): hydroxypropyl methacrylate (HPMA, Arkema): 10%,
- Radical initiator (D): Trigonox 29C: 0.6 phr (per 100g of the mixture of A and C)

Composition 12

- Cyclic monomers: DCPD: 56%, TCPD: 24%,
- Metathesis catalyst (B): C764: 0.020phr /Retarder: PPh3 0.5 phr (per 100g of the mixture of A and C)
- Co-monomer: Trimethyl propane trimethacrylate (TMPTMA, Sigma-Aldrich): 20%,
- Radical initiator (D): Trigonox 29C: 0.6 phr (per 100g of the mixture of A and C)

Composition 13

- Cyclic monomer (A): DCPD: 89.9%
- Metathesis catalyst (B): (VC 843)- Ruthenium salicycladimine catalyst solution 1.2phr (per 100g of the mixture of A and C) /Retarder: 0.02phr (per 100g of the mixture of A and C) of triisopropyl phosphite
- Co-monomer (C): Trimethyl propane trimethacrylate (TMPTMA, Sigma-Aldrich): 10%,
- Radical initiator (D): Trigonox B: 0.6%

Composition 14

- Cyclic monomers (A): DCPD: 80%, TCPD: 10%,
- Metathesis catalyst (B): C764: 0.020phr /Retarder: P(OiPr)3 0.008phr (per 100g of the mixture of A and C)
- Co-monomer (C): methacrylate isocyanate (TCI Europe): 10%,
- Radical initiators (D): Trigonox 29C: 0.3 phr, Trigonox B: 0.3 phr

Composition 15

- Cyclic monomers (A): DCPD: 60.3%, TCPD: 6.7%,
- Metathesis catalyst (B): C764: 0.020phr /Retarder: $P(O^iPr)_3$ 0.008phr (per 100g of the mixture of A and C)
- Co-monomer (C): 3,3,5 trimethyl cyclohexanol methacrylate (SR421A, Arkema): 33%,
- Radical initiators (D): Trigonox 29C: 0.3 phr, Trigonox B: 0.3 phr

**Samples preparation:**

**Continuous glass fiber samples:**

2400 tex glass fibers T48 are used to produce unidirectional samples (UD) by means of a 'hand pultrusion' process. The T48 glass fibers are obtainable from PPG and carry an optimized sizing (T48) comprising polybutadiene or a polybutadiene derivative (ex. Lithene Ultra) as a film former. Furthermore a commercially available silane: *N-Vinylbenzyl-N'-aminoethyl-3-aminopropylpolysiloxane, hydrochloride* was used in the sizing formulation. Fiber bundles are impregnated with the uncured resin, pulled through a mold having a cross-section of 2*70 $mm^2$ and subsequently cured at curing temperature CT. In some examples the mold is subsequently submitted to a second curing temperature; see further below (Table 5). The amount of fiberglass is chosen to give a fiber volume fraction of 0.6-0.62 according to ISO 1171.

The evaluation of the samples is done by evaluating the fiber matrix adhesion according to the method described above. Table 5 represents the three-point bending (T3PBT) test results obtained for Examples 1-17.

As can be seen in Table 5, all samples according to the invention and showing a factor X of between 2.5 and 1000, exhibit 3-point bending strengths of higher than 55 MPa. Adhesion between the glass fibers and the matrix in these materials can be considered to be very good. The bending strength observed for the composite plates of Comparative Examples 8, 12, 13, 18, and 19 is very low, indicating a poor adhesion between the glass fibers and the matrix in these materials between the glass fibers and the matrix.

Table 5: three-point bending (T3PBT) test results obtained for Examples 1-17.

| Example | Composition | Curing temperature CT (°C) | $t_{C80}$ (min) | Curing time (min) | Second curing temperature (°C) | Second curing time (h) | $t_{1/2CT}$ | X factor | T3PBT (The strength) (MPa) |
|---|---|---|---|---|---|---|---|---|---|
| 1 | 1 | 80 | 60 | 60 | 150 | 0.5 | 1061 | 17,7 | 108 |
| 2 | 1 | 130 | 3 | 60 | - | | 4,9 | 1,6 | Soft sample |
| 3 | 2 | 90 | 20 | 20 | 150 | 0.5 | 321 | 16,1 | 107 |
| 4 | 3 | 90 | 20 | 20 | 150 | 0.5 | 321 | 16,1 | 100 |
| 5 | 4 | 90 | 15 | 15 | 150 | 0.5 | 321 | 21,4 | 80 |
| 6 | 1 | 150 | 1 | 60 | - | - | 0,81 | 0,8 | Soft sample |
| 7 | 5 | 130 | 3 | 60 | - | - | 1,96 | 0,7 | Soft sample |
| 8 | 6 | 100 | 7 | 1440 | - | - | 103 | 14,7 | 90 |
| 9 | 7 | 100 | 10 | 1440 | - | - | 8350 | 835,0 | 55 |
| 10 | 8 | 130 | 3 | 360 | - | - | 10,3 | 3,4 | 98 |
| 11 | 9 | 130 | 3 | 360 | - | - | 2,8 | 0,9 | Soft sample |
| 12 | 10 | 120 | 5 | 1440 | - | - | 7,4 | 1,5 | Soft sample |
| 13 | 11 | 100 | 7 | 7 | 150 | 0.5 | 103 | 14.7 | 82 |
| 14 | 12 | 100 | 7 | 7 | 150 | 0.5 | 103 | 14.7 | 110 |
| 15 | 13 | 90 | 15 | 20 | 190 | 1 | 3260 4 | 2173,6 | 110 |
| 16 | 14 | 100 | 7 | 7 | 150 | 0.5 | 103 | 14.7 | 110 |
| 17 | 15 | 90 | 10 | 15 | 150 | 0.5 | 321 | 32.1 | 107 |

## Claims

1. A curable composition, comprising:

   (A) a cyclic olefin;
   (B) a metathesis catalyst for polymerizing the cyclic olefin at a suitable curing temperature (CT);
   (C) a radical polymerization curable compound; and
   (D) a curing system for compound (C),

   wherein the curing system comprises a curing agent selected such that its half life $t_{1/2CT}$ at the curing temperature and the time $t_{c80}$ needed to complete at least 80% of the cyclic olefin polymerization reaction at the curing temperature (CT) satisfy 2.5 times $t_{c80} < t_{1/2CT} <$ 1000 times $t_{c80}$ .

2. Curable composition according to claim 1, wherein 10 times $t_{c80} < t_{1/2CT} <$ 100 times $t_{c80}$

3. Curable composition according to claim 1 or 2, wherein the curing agent has a one-minute half-life temperature of less than 183°C, more preferably of less than 170°C, even more preferably of less than 160°C.

4. Curable composition according to any one of the preceding claims, wherein compound (C) comprises a mixture of a compound (C1) comprising at least two isocyanate groups and a compound (C2) comprising a hydroxyl group.

5. Curable composition according to any one of the preceding claims, wherein compound (C) comprising at least one ethylenically unsaturated bond.

6. Curable composition according to any one of the preceding claims, wherein compound (C) comprises a ester compound, preferably a (meth)acrylate compound.

7. Curable composition according to any one of the preceding claims, wherein compound (C) comprises an oligomer

8. Curable composition according to claim 6, wherein compound (C) comprises a polyester and/or vinyl ester resin (C3) and a reactive diluent (C4), preferably an alkenyl aromatic compound.

9. Curable composition according to any one of the preceding claims, comprising 0.1 - 30 wt.% of compound (C), more preferably 3-20 wt.% of compound (C), the wt.% being relative to the total weight of the composition.

10. Curable composition according to any one of the preceding claims, comprising 0.1-10 wt.% of curing agent (D), more preferably 0.2 - 1 wt.% of the curing agent, the wt.% being relative to the total weight of the composition.

11. Curable composition according to any one of the preceding claims, wherein the radical generator comprises a peroxide, preferably a non-cyclic peroxide.

12. Curable composition according to any one of the preceding claims, wherein the cyclic olefin comprises dicyclopentadiene (DCPD) and/or tricyclopentadiene (TCPD.

13. Curable composition according to any one of the preceding claims, comprising reinforcing fibers provided with a sizing composition.

14. Method of manufacturing a molded article of a curable composition in accordance with any one of the preceding claims, the method comprising

   - combining at least the components (A) to (D) to form the composition;
   - holding the composition at the suitable curing temperature effective to promote an olefin metathesis polymerization reaction of the cyclic olefin (A) and the metathesis catalyst (B);
   - holding the composition at a second temperature effective to promote a radical polymerization reaction of compound (C) and the curing system (D).

15. Method according to claim 14, wherein the second temperature is lower than 190°C, more preferably lower than 170°C, even more preferably lower than 150°C, and most preferably lower than 140°C.

**16.** Method according to claim 14 or 15, wherein the curing temperature and the second temperature are equal.

**17.** Method according to any one of claims 14-16, comprising holding the composition at the curing temperature during a time interval sufficiently long to complete at least 80%, more preferably at least 90%, and most preferably at least 95% of the cyclic olefin polymerization reaction.

**18.** Method according to any one of claims 14-17, comprising the step of injecting the composition into a closed mold, wherein the mold is provided with reinforcing fibers prior to injecting the composition.

**19.** Molded article of a composite material, comprising (a) a matrix polymer prepared by polymerizing a curable composition in accordance with any one of claims 1-12; and (b) reinforcing fibers in accordance with claim 13, wherein the transverse 3 point bending strength at room temperature according to ISO 14125 of the article is above 50 MPa, more preferably above 80 MPa, and most preferably above 100 MPa.

Europäisches Patentamt
European Patent Office
Office européen des brevets

# EUROPEAN SEARCH REPORT

Application Number
EP 16 30 5134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 2 982 709 A1 (TELENE SAS [FR]) 10 February 2016 (2016-02-10) * the whole document * ----- | 1-3,5-19 | INV. C08G61/08 C08K7/14 C08K3/40 C08K9/06 C08K13/06 C08L65/00 C08J5/24 C08F283/14 |
| X | EP 1 589 054 A1 (ZEON CORP [JP]) 26 October 2005 (2005-10-26) * examples 1-8 * ----- | 1-3,5-19 | |
| X | US 2012/088879 A1 (YOSHIWARA AKIHIKO [JP]) 12 April 2012 (2012-04-12) * paragraph [0172] - paragraph [0176]; examples 1-9; tables 1,2 * ----- | 1-19 | |
| X | DATABASE WPI Week 200354 Thomson Scientific, London, GB; AN 2003-572473 XP002757607, -& JP 2003 019756 A (SEKISUI CHEM IND CO LTD) 21 January 2003 (2003-01-21) * abstract * * examples 1,2 * ----- | 1-3,5-19 | TECHNICAL FIELDS SEARCHED (IPC) |
| X | DATABASE WPI Week 201552 Thomson Scientific, London, GB; AN 2015-381875 XP002757608, -& WO 2015/098636 A1 (RIMTEC CORP) 2 July 2015 (2015-07-02) * abstract * * examples 1,2 * ----- | 1-3,5-19 | C08F C08G C08J C08L C09J |

The present search report has been drawn up for all claims

2

| Place of search | Date of completion of the search | Examiner |
|---|---|---|
| Munich | 12 May 2016 | Meiners, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 16 30 5134

This annex lists the patent family members relating to the patent documents cited in the above-mentioned European search report. The members are as contained in the European Patent Office EDP file on
The European Patent Office is in no way liable for these particulars which are merely given for the purpose of information.

12-05-2016

| Patent document cited in search report | Publication date | Patent family member(s) | Publication date |
|---|---|---|---|
| EP 2982709 A1 | 10-02-2016 | EP 2982709 A1 | 10-02-2016 |
| | | WO 2016020261 A1 | 11-02-2016 |
| | | WO 2016022751 A1 | 11-02-2016 |
| EP 1589054 A1 | 26-10-2005 | AT 461954 T | 15-04-2010 |
| | | CN 1764681 A | 26-04-2006 |
| | | EP 1589054 A1 | 26-10-2005 |
| | | JP 4285479 B2 | 24-06-2009 |
| | | KR 20050106407 A | 09-11-2005 |
| | | US 2008125531 A1 | 29-05-2008 |
| | | WO 2004067601 A1 | 12-08-2004 |
| US 2012088879 A1 | 12-04-2012 | NONE | |
| JP 2003019756 A | 21-01-2003 | NONE | |
| WO 2015098636 A1 | 02-07-2015 | TW 201532796 A | 01-09-2015 |
| | | WO 2015098636 A1 | 02-07-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1468004 A
- EP 2280017 A
- EP 2151446 A
- EP 1757613 A
- EP 1577282 A
- EP 2460587 A